Europäisches Patentamt

**European Patent Office**

**Office européen des brevets**

(19)

(11) Numéro de publication : **0 236 146**
**B1**

(12)

# FASCICULE DE BREVET EUROPÉEN

(45) Date de publication du fascicule du brevet :
**07.06.89**

(51) Int. Cl.⁴ : **B 60 N  1/00**

(21) Numéro de dépôt : **87400006.0**

(22) Date de dépôt : **05.01.87**

(54) **Armature de siège de véhicule automobile ou analogue.**

(30) Priorité : **27.01.86 FR 8601091**

(43) Date de publication de la demande :
**09.09.87 Bulletin 87/37**

(45) Mention de la délivrance du brevet :
**07.06.89 Bulletin 89/23**

(84) Etats contractants désignés :
**AT BE CH DE ES GB IT LI LU NL SE**

(56) Documents cités :
**FR–A– 2 294 667**
**FR–A– 2 328 365**
**FR–A– 2 373 255**
**FR–A– 2 411 104**
**US–A– 4 492 408**

(73) Titulaire : **ECIA - EQUIPEMENTS ET COMPOSANTS**
**POUR L'INDUSTRIE AUTOMOBILE**
**F-25400 Audincourt (FR)**

(72) Inventeur : **Bianchl, François**
**20, Combe Saint Germain**
**F-25700 Valentigney (FR)**
Inventeur : **Duval, Alain**
**10, rue de la Fontaine**
**F-25350 Mandeure (FR)**
Inventeur : **Fourrey, François**
**34, rue du Petit Chênois**
**F-25200 Montbeliard (FR)**

(74) Mandataire : **Polus, Camille et al**
**c/o Cabinet Lavoix 2, Place d'Estienne d'Orves**
**F-75441 Paris Cedex 09 (FR)**

Jouve, 18, rue St-Denis, 75001 Paris, France

EP 0 236 146 B1

## Description

La multiplicité des types de véhicules automobiles ainsi que la variété des exigences des utilisateurs obligent les constructeurs à disposer d'un grand nombre de types de sièges ayant des structures particulières adaptées à chaque marque. En effet, les armatures de l'assise et du dossier sont généralement reliées entre elles par un axe qui porte les dispositifs de réglage de leurs positions relatives. Il est donc nécessaire de modifier l'ensemble du siège lorsque son dispositif de réglage est changé.

Par ailleurs, le FR-A-2 373 255 décrit une armature de siège de véhicule automobile qui comporte un cadre d'assise formé par un tube unique recourbé et soudé sur lui-même et un cadre de dossier formé par un tube recourbé en U et aplati aux extrémités libres de ses branches pour constituer des pattes de fixation. Les cadres sont reliés entre eux par l'intermédiaire d'un levier articulé et des deux éléments d'une glissière.

Une telle armature est adaptée à la réalisation d'un siège à dossier rabattable sur l'assise mais ne peut permettre la réalisation d'autres types de siège sans modifications de l'ensemble.

La présente invention a pour but de remédier à cet inconvénient en fournissant une armature de siège automobile qui puisse être utilisée, quels que soient les types de réglage choisis ou même le type du véhicule.

L'invention a en effet pour objet une armature de siège automobile, ou analogue, comportant un cadre d'assise formé par un tube unique recourbé et soudé sur lui-même, et un cadre de dossier formé par un tube recourbé en U et aplati aux extrémités libres de ses branches pour constituer des pattes de fixation, caractérisée en ce que le tube du cadre d'assise a sur trois côtés du cadre, les côtés latéraux et le côté arrière, une section ovalisée ayant au moins une face plane, et est aplati localement aux extrémités des côtés latéraux adjacentes au côté arrière, et en ce que les pattes de fixation du cadre du dossier pénètrent à l'intérieur du cadre d'assise et sont assemblées à celui-ci par un axe d'articulation traversant les parties aplaties des côtés latéraux.

Selon une autre caractéristique de l'invention, les pattes de fixation se prolongent au-delà de l'axe d'articulation et sont reliées à un dispositif de support.

Grâce à ces dispositions, l'armature est peu coûteuse tout en étant très résistante. En outre l'axe d'articulation sert uniquement à l'assemblage du dossier et de l'assise tandis que les pattes de fixation peuvent, si désiré, être reliées à un dispositif de réglage approprié et/ou à un support mobile sans qu'il soit nécessaire de modifier la structure du siège.

La description ci-dessous d'un mode de réalisation donné à titre d'exemple non limitatif, et représenté aux dessins annexés, fera d'ailleurs ressortir les avantages et caractéristiques de l'invention.

Sur ces dessins :

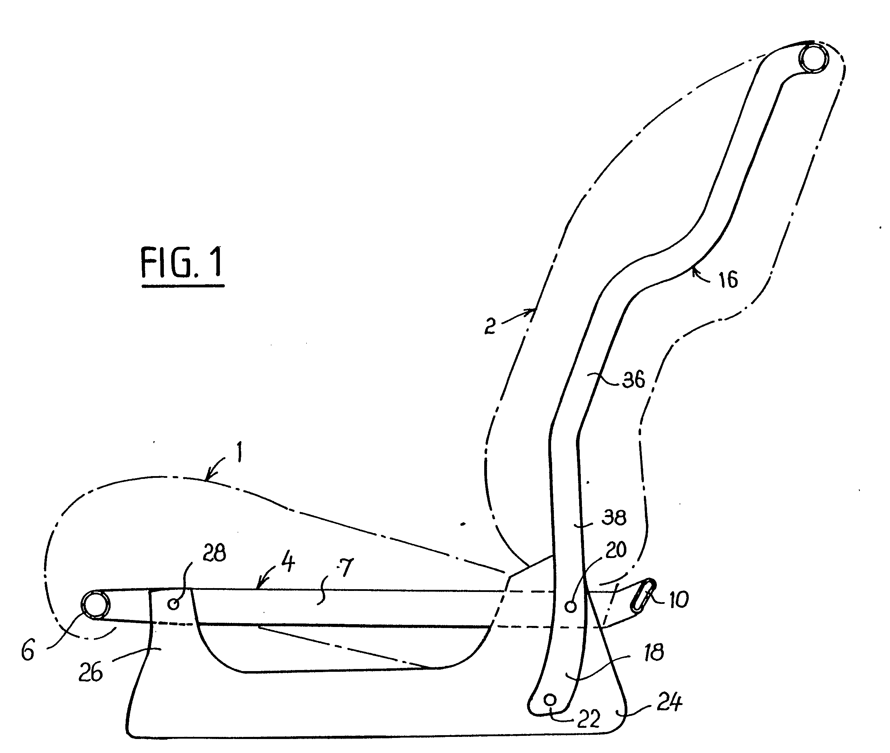

- la Fig. 1 est une vue en coupe longitudinale d'une armature de siège selon l'invention ;
- la Fig. 2 est une vue schématique de dessus du cadre de l'assise ;
- la Fig. 3 est une vue de détail à plus grande échelle, en coupe suivant la ligne 3-3 de la figure 2.

Le siège représenté sur les figures est destiné à être monté dans un véhicule automobile, ou analogue. Il est constitué, de la manière habituelle, par une assise 1 et un dossier 2 articulés entre eux et formés chacun par une armature métallique supportant une nappe élastique et recouverte d'un rembourrage.

Selon l'invention, l'armature métallique de l'assise 1 est constituée par un cadre réalisé au moyen d'un tube unique 4 recourbé et soudé sur lui-même. Ce tube a une section sensiblement circulaire sur l'un des côtés du cadre, le côté avant 6. Par contre, il est ovalisé et comporte deux faces planes, sensiblement parallèles, sur les deux côtés 7 et 8 adjacents au côté avant 6 ainsi que sur le côté arrière 10. Les faces planes des côtés latéraux 7 et 8 sont sensiblement verticales, tandis que celles du côté arrière 10 sont de préférence inclinées. Le côté arrière est conformé, par exemple incurvé, de façon à assurer un dégagement pour les pieds d'un passager arrière.

A leur jonction avec le côté arrière 10 chacun des côtés latéraux 7 est aplati en 12, de sorte que sa paroi extérieure est presque en contact avec sa paroi interne plate. De préférence, un aplatissement 14 est également prévu dans la face externe des côtés 7 et 8, au voisinage du côté avant 6.

Le cadre 16 du dossier 2 est également réalisé au moyen d'un tube unique. Ce tube a une section sensiblement circulaire et est recourbé en U renversé, les extrémités de ses deux branches étant aplaties de façon à constituer des pattes de fixation 18. Chacune des pattes de fixation 18 est introduite à l'intérieur du cadre 4 de l'assise et assemblée à ce cadre au moyen d'un axe d'articulation 20 traversant la portion aplatie 12 du cadre.

Les pattes de fixation 18 se prolongent vers le bas au-delà de l'axe d'articulation 20, de façon à permettre l'assemblage du cadre 16 sur un support, cet assemblage pouvant être obtenu au moyen d'un organe de fixation, par exemple une vis 22 dont la position est choisie en fonction de l'inclinaison désirée pour le cadre 16 et, par suite, pour le dossier 2.

L'ensemble du dossier et de l'assise, c'est-à-dire en fait des cadres 4 et 16, est de préférence monté sur un flasque 24 qui se prolonge entre le cadre 4 et la patte de fixation correspondante 18 et est, comme ces derniers organes, traversé par l'axe d'articulation 20.

Le flasque 24, dans le mode de réalisation représenté, comporte une aile 26 en saillie vers le haut, qui est également fixée au cadre 4 au moyen d'une vis, ou analogue, 28 traversant la partie aplatie 14 du côté latéral 7 ou 8. Cette fixation de l'assise 4, aux deux points 20 et 28, sur le flasque 24 permet un guidage précis de l'ensemble et une rigidification de la structure.

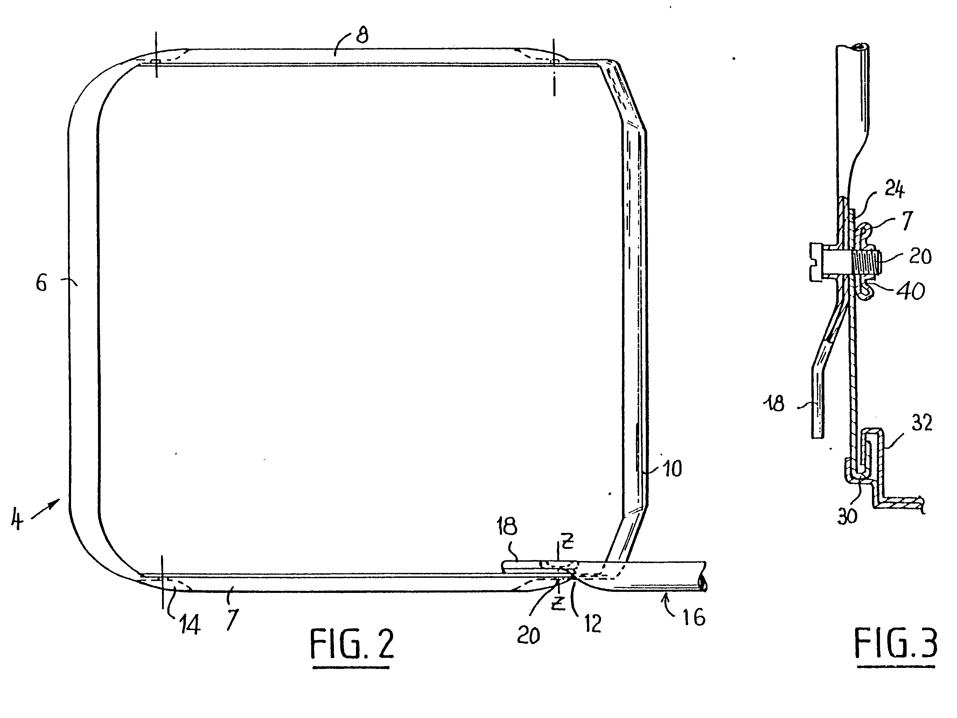

Le flasque 24 peut être un organe immobilisé par rapport au châssis du véhicule, de sorte que l'ensemble du siège est immobile, ou il peut être constitué — comme représenté sur la figure 3 — par le prolongement d'un coulisseau 30 susceptible de se déplacer dans une glissière 32 fixée sur le plancher du véhicule. Dans ce cas, l'ensemble du siège est réglable en translation par rapport de fixation à la glissière 32.

De même au lieu d'être fixes, les pattes de fixation 18 peuvent être reliées à un dispositif de réglage de l'inclinaison du dossier qui commande leur pivotement autour de l'axe 20 jusqu'à la position recherchée. Ces pattes peuvent, également, être libres et simplement associées à un organe escamotable de retenue lorsque le dossier 2 doit pouvoir être rabattu sur l'assise 1.

La présence de cet organe de retenue de même que celle du dispositif de réglage d'inclinaison, ne modifie en rien la structure du siège de sorte qu'ils peuvent être ajoutés ou non, à volonté.

De préférence, les branches du cadre 16 du dossier sont recourbées pour former un bossage 36 en saillie en direction de l'assise, au-dessus d'une branche 38 sensiblement verticale, qui est prolongée par la patte de fixation 18, ce qui permet par exemple une meilleure habitabilité pour les genoux d'un passager arrière.

Dans tous les cas le cadre d'assise présente une résistance importante grâce notamment à l'aplatissement de ses côtés latéraux et à leur fixation sur le flasque 24 tandis que sa réalisation, de même que celle du cadre du dossier, est simple et peu coûteuse et peut aisément être effectuée pratiquement sans soudure. On dispose donc d'un siège qui peut être utilisé aussi bien sur des véhicules bon marché que sur des véhicules luxueux utilisant des systèmes de réglage à commande électrique. Le prix de revient et la résistance de l'armature peuvent d'ailleurs être encore réduits en perçant les trous de passage de l'axe d'articulation et/ou de fixation du flasque 24 sur le cadre par un procédé de fluoperçage qui permet de réaliser en même temps que le trou un manchon 40 jouant le rôle de palier.

**Revendications**

1. Une armature de siège automobile, ou analogue, comportant un cadre d'assise (4) formé par un tube unique recourbé et soudé sur lui-même, et un cadre de dossier (16) formé par un tube recourbé en U et aplati aux extrémités libres de ses branches pour constituer des pattes de fixation (18), caractérisée en ce que le tube du cadre d'assise a sur trois côtés, les côtés latéraux (7, 8) et le côté arrière (10), une section ovalisée ayant au moins une face plane, et est aplati localement aux extrémités (12) des côtés latéraux adjacentes au côté arrière, en ce que les pattes de fixation (18) du cadre de dossier pénètrent à l'intérieur du cadre d'assise et sont assemblées à celui-ci par un axe d'articulation (20) traversant les parties aplaties (12) des côtés latéraux.

2. Armature suivant la revendication 1, caractérisée en ce que les pattes de fixation (18) du cadre (16) du dossier se prolongent en dessous de l'articulation (20) et son fixées à un dispositif de support (24) .

3. Armature suivant l'une des revendications 1 et 2, caractérisée en ce que le côté avant (6) du cadre de l'assise a une section circulaire.

4. Armature suivant l'une des revendications précédentes, caractérisée en ce que le côté arrière (10) du cadre de l'assise est incliné et incurvé pour assurer un dégagement pour les pieds d'un passager arrière.

5. Armature suivant l'une des revendications précédentes, caractérisée en ce qu'un flasque (24) de support du siège est intercalé entre le cadre d'assise (4) et chacune des pattes (18) du cadre du dossier et est traversé par l'axe d'articulation (20).

6. Armature suivant l'une des revendications précédentes, caractérisée en ce que chacun des côtés latéraux (7, 8) du cadre est aplati localement (en 14), au voisinage du côté avant (6) et est fixé intérieurement au flasque de support (24).

7. Armature suivant l'une des revendications précédentes caractérisée en ce que les branches du cadre (16) du dossier sont recourbées de façon à former un bossage (36) en saillie en direction de l'assise.

8. Armature suivant l'une des revendications 2 à 7, caractérisée en ce que le flasque de support (24) est un prolongement d'un coulisseau (30) mobile dans une glissière fixe (32).

**Claims**

1. A motor vehicle seat framework or the like, comprising a seat frame (4) formed by a single tube bent and welded on its self, and a backrest frame (16) formed by a tube bent into a U shape and flattened at the free end portions of its arms to form attaching tabs (18), characterized in that the seat frame tube has on three sides, the lateral sides (7, 8) and the rear side (10), an ovalized section having at least one planar face and is flattened locally at those ends (12) of the lateral sides which are adjacent the rear side, and the attaching tabs (18) of the backrest frame enter the seat frame and are assembled thereto by a pivot pin (20) extending through the flattened portions (12) of the lateral sides.

2. A framework according to claim 1, characterized in that the attaching lugs (18) of the backrest frame (16) are extended below the pivot pin (20) and are attached to a support device (24).

3. A framework according to one of claims 1 and 2, characterized in that the front side (6) of the seat frame has a circular section.

4. A framework according to any of the preceding claims, characterized in that the rear side (10) of the seat frame is inclined and curved so as to clear the feet of a rear passenger.

5. A framework according to any of the preceding claims, characterized in that a side wall (24) supporting the seat is interposed between the seat frame (4) and each of the tabs (18) of the backrest frame, the pivot pin (20) extending through such side wall (24).

6. A framework according to any of the preceding claims, characterized in that each of the lateral sides (7, 8) of the frame is flattened locally (at 14) adjacent the front side (6) and is fixed internally to the support side wall (24).

7. A framework according to any of the preceding claims, characterized in that the arms of the backrest frame (16) are so curved as to form a boss (36) which projects in the direction of the seat.

8. A framework according to one of claims 2 to 7, characterized in that the support side wall (24) is an extension of a slide (30) movable in a fixed slideway (32).

**Patentansprüche**

1. Sitzarmatur für Kraftfahrzeuge oder dergleichen, mit einem Sitzrahmen (4), der durch ein einzelnes Rohr gebildet ist, das umgeschlagen und mit sich selbst verschweißt ist, und einem Rückenlehnenrahmen (16), der durch ein Rohr gebildet ist, das U-förmig umgeschlagen und an den freien Enden seiner Schenkel abgeflacht ist, um Befestigungslappen (15) zu bilden, dadurch gekennzeichnet, daß das Rohr des Sitzrahmens an drei Seiten, den seitlichen Seiten (7, 8) und der Rückseite (10) einen ovalen Abschnitt aufweist, der wenigstens eine ebene Seite aufweist, und welches lokal an den Enden (12) der seitlichen Seiten in der Nähe der Rückseite abgeflacht ist, und daß die Befestigungslappen (18) des Rückenlehnenrahmens in das Innere des Sitzrahmens eindringen und mit diesem durch eine Gelenkachse (20) verbunden sind, die die abgeflachten Bereiche (12) der seitlichen Seiten durchquert.

2. Armatur nach Anspruch 1, dadurch gekennzeichnet, daß die Befestigungslappen (18) des Rahmens (16) der Rückenlehne unterhalb des Gelenks (20) sich verlängern und an einer Lagervorrichtung (24) befestigt sind.

3. Armatur nach einem der Ansprüche 1 oder 2, dadurch gekennzeichnet, daß die Vorderseite (6) des Sitzrahmens einen kreisförmigen Querschnitt aufweist.

4. Armatur nach einem der vorhergehenden Ansprüche, dadurch gekennzeichnet, daß die Rückseite (10) des Sitzrahmens geneigt und gebogen ist, um eine Ausnehmung für die Füße eines hinteren Passagiers sicherzustellen.

5. Armatur nach einem der vorhergehenden Ansprüche, dadurch gekennzeichnet, daß ein Lagerflansch (24) des Sitzes zwischenliegend zwischen dem Sitzrahmen (4) und einem jeden der Lappen (18) des Ruckenlehnenrahmens angeordnet ist und von der Gelenkachse (20) durchquert wird.

6. Armatur nach einem der vorhergehenden Ansprüche, dadurch gekennzeichnet, daß jede der seitlichen Seiten (7, 8) des Rahmens lokal (bei 14) in der Nähe der Vorderseite (6) abgeflacht ist und im Inneren an dem Lagerflansch (24) befestigt ist.

7. Armatur nach einem der vorhergehenden Ansprüche, dadurch gekennzeichnet, daß die Schenkel des Rahmens (16) der Rückenlehne umgebogen sind derart, daß sie einen Vorsprung bzw. eine Ausbuchtung (36) in Richtung auf den Sitz bzw, die Grundplatte bilden.

8. Armatur nach einem der Ansprüche 2 bis 7, dadurch gekennzeichnet, daß der Lagerflansch (24) eine Verlängerung eines Gleitstücks (30) ist, das in einer festen Gleitschiene (32) bewegbar ist.

FIG. 1

EP 0 236 146 B1

FIG. 2

FIG. 3

EP 0 236 146 B1